# EUROPEAN PATENT APPLICATION

(11) **EP 4 644 345 A1**
(43) Date of publication of application: **05.11.2025**
(21) Application number: 24749692.0
(22) Date of filing: 31.01.2024
(51) Int. Cl.: C03C 23/00, C03B 25/00, C03C 17/00

(54) **GLASS HAVING EDGE FILM REMOVED AND FORMING METHOD THEREFOR**

(30) Priority: 01.02.2023 CN 202310049843
(71) Applicant: Fuyao Glass Industry Group Co., Ltd., Fuqing, Fujian 350300 (CN)
(72) Inventor: WANG, Hongfei, Village Fuqing, Fujian 350300 (CN); LI, Weijun, Village Fuqing, Fujian 350300 (CN); ZHANG, Canzhong, Village Fuqing, Fujian 350300 (CN)
(74) Representative: Inchingalo, Simona
(86) International application number: PCT/CN2024/074820
(87) International publication number: WO 2024/160213

(57) **Abstract**

The present application relates to an edge de-coated glass and a forming method thereof. The edge de-coated glass includes a glass plate (1) and a transparent conductive coating (2) disposed on at least one surface of the glass plate (1). The surface of the glass plate (1) provided with the transparent conductive coating (2) includes a coated area (3) and a de-coated area (4). The de-coated area is located at an edge of the glass plate, the transparent conductive coating in the de-coated area is completely and/or partially removed, and a width x of the de-coated area is greater than or equal to 10 mm. The glass plate (1) further includes a mold contact area (5) located at the edge of the glass plate, the mold contact area (5) at least partially overlaps with the de-coated area (4), and a width y of the mold contact area (5) satisfies y<x.

## Description

### CROSS-REFERENCE TO RELATED APPLICATIONS

This application claims priority to Chinese patent application No. 202310049843.X entitled "EDGE DE-COATED GLASS AND FORMING METHOD THEREOF", and filed with the China National Intellectual Property Administration (CNIPA) on February 1, 2023, the content of which is hereby incorporated by reference in its entirety.

### TECHNICAL FIELD

The present application relates to the technical field of glass.

### BACKGROUND

For glass coated with a transparent conductive coating, if the coating is not removed at the edges of the glass plate, after the glass plate is laminated to form laminated glass, the edges of the coating may be oxidized and discolored due to exposure to air, which may even lead to corrosion of the coating. This can reduce the conductive cross-sectional area and generate hot spots, thus resulting in a series of usage risks.

However, after the coating is removed at the edges of the glass plate, the glass plate will be subjected to a high-temperature heat treatment at a minimum of 560 °C and a bend-forming treatment. After that, during a cooling annealing process, the tensile stress generated by contact between the glass plate and the annealing mold can be superimposed with the tensile stress caused by the removal of coating, resulting in an increase in the overall tensile stress of the glass plate, thereby increasing the risk of edge cracking in the glass plate.

### SUMMARY

According to various embodiments of the present application, the present application provides an edge de-coated glass and a forming method thereof.

A technical solution adopted by the present application is as follows:
An edge de-coated glass includes a glass plate and a transparent conductive coating disposed on at least one surface of the glass plate;
wherein the surface of the glass plate provided with the transparent conductive coating includes a coated area and a de-coated area, the de-coated area is located at an edge of the glass plate, the transparent conductive coating in the de-coated area is completely and/or partially removed, and a width x of the de-coated area is greater than or equal to 10 mm;
from the edge of the glass plate toward an inner side thereof, the glass plate sequentially includes an edge compressive stress zone and an edge tensile stress zone, a compressive stress of the edge compressive stress zone is greater than or equal to 9 MPa, and a tensile stress of the edge tensile stress zone is less than or equal to 7 MPa.

Further, the glass plate includes a coating compressive stress area and a coating tensile stress area, the coating tensile stress area is adjacent to the coating compressive stress area and is located at a side of the coating compressive stress area away from the edge of the glass plate; the glass plate further includes a mold compressive stress area and a mold tensile stress area, the mold tensile stress area is adjacent to the mold compressive stress area and is located at a side of the mold compressive stress area away from the edge of the glass plate; and the coating compressive stress area at least partially overlaps with the mold tensile stress area.

Further, the edge compressive stress zone includes an overlapping area of the coating compressive stress area and the mold compressive stress area, and the edge tensile stress zone includes an overlapping area of the coating tensile stress area and the mold tensile stress area and further includes an overlapping area of the coating compressive stress area and the mold tensile stress area.

Further, the glass plate further includes a mold contact area located at the edge of the glass plate, the mold contact area at least partially overlaps with the de-coated area, and a width y of the mold contact area satisfies y<x, the coating compressive stress area is located within the de-coated area, and the mold compressive stress area is located within the mold contact area.

Further, a width of the coating compressive stress area is the same as a width of the de-coated area, a width of the coating tensile stress area is in a range from 30 mm to 90 mm; a width of the mold compressive stress area is the same as a width of the mold contact area, and a width of the mold tensile stress area is in a range from 10 mm to 20 mm.

Further, the width y of the mold contact area is in a range from 8 mm to 12 mm.

Further, the width y of the mold contact area satisfies y≤(x-5) mm.

Further, the width y of the mold contact area satisfies y≤(x-10) mm.

Further, the width y of the mold contact area satisfies y≤(x-15) mm.

Further, the width x of the de-coated area is in a range from 20 mm to 40 mm.

Further, the de-coated area includes a complete-de-coated area and a partial-de-coated area, the complete-de-coated area is adjacent to the edge of the glass plate, the partial-de-coated area is adjacent to the coated area, and a width of the partial-de-coated area is in a range from 0 mm to 5 mm.

Further, the compressive stress of the edge compressive stress zone is greater than or equal to 25 MPa, and the tensile stress of the edge tensile stress zone is greater than or equal to 6 MPa.

Another technical solution adopted by the present application is as follows:

A method for forming an edge de-coated glass, including the following steps:
coating a transparent conductive coating on a surface of a glass plate;
completely and/or partially removing the transparent conductive coating from an edge of the glass plate to form a de-coated area and a coated area, wherein a width x of the de-coated area is greater than or equal to 10 mm; and
heat-bending and cooling to anneal the glass plate after the coating removal, thereby forming an edge compressive stress zone with a compressive stress greater than or equal to 9 MPa and an edge tensile stress zone with a tensile stress less than or equal to 7 MPa at the edge of the glass plate.

Further, during cooling to anneal the glass plate, the glass plate includes a mold contact area, which is located at the edge of the glass plate and is in contact with a mold, a width of the mold contact area is y, the mold contact area at least partially overlaps with the de-coated area, and the width y of the mold contact area satisfies y<x.

Further, the width y of the mold contact area is in a range from 8 mm to 12 mm.

Further, the width x of the de-coated area is in a range from 20 mm to 40 mm.

Further, the width y of the mold contact area and the width x of the de-coated area satisfy y≤(x-5) mm.

Further, during cooling to anneal the glass plate, a position of the mold that is in contact with the edge of the glass plate is heated to and held at a temperature.

Further, completely and/or partially removing the transparent conductive coating from the edge of the glass plate to form the de-coated area and the coated area includes the following steps:
determining positions of the de-coated area and the coated area;
completely removing the transparent conductive coating from a complete-de-coated area, and partially removing the transparent conductive coating from a partial-de-coated area, wherein the de-coated area includes the complete-de-coated area and the partial-de-coated area, the complete-de-coated area is adjacent to the edge of the glass plate, and the partial-de-coated area is adjacent to the coated area.

Details of one or more embodiments of the present application are set forth in the accompanying drawings and description below. Other features, objects, and advantages of the present application will become apparent from the description, drawings, and claims.

### BRIEF DESCRIPTION OF THE DRAWINGS

FIG. 1 is a schematic structural view of an edge de-coated glass in the present application.
FIG. 2 is a schematic view showing a cooling annealing process for an edge de-coated glass in the present application.
FIG. 3 is a schematic view showing stress distribution in an edge de-coated glass in the present application.
FIG. 4 is a schematic view of a de-coated area of an edge de-coated glass in the present application.

Reference signs:
1: glass plate; 2: transparent conductive coating; 3: coated area; 4: de-coated area; 41: complete-de-coated area; 42: partial-de-coated area; 5: mold contact area; 6: coating compressive stress area; 7: coating tensile stress area; 8: mold compressive stress area; 9: mold tensile stress area; 10: annealing mold; 11: heating and temperature-holding device.

### DETAILED DESCRIPTION

The technical content, objects and effects of the present application will be described below in detail with reference to the embodiments and the accompanying drawings.

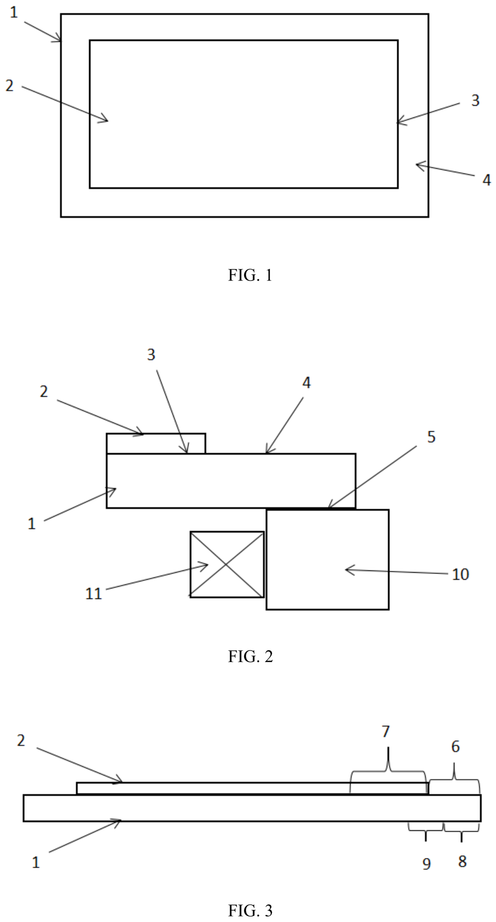

Referring to FIGs. 1 and 2, FIG. 1 shows a top view of an edge de-coated glass of the present application, which includes a glass plate 1 and a transparent conductive coating 2 disposed on at least one surface of the glass plate 1.

The surface of the glass plate 1 provided with the transparent conductive coating 2 includes a coated area 3 and a de-coated area 4. The de-coated area 4 is located at an edge of the glass plate 1. The transparent conductive coating 2 in the de-coated area 4 is completely and/or partially removed. A width x of the de-coated area 4 is greater than or equal to 10 mm. Furthermore, FIG. 1 also shows that the de-coated area 4 is disposed around the coated area 3, i.e., an outer boundary of the coated area 3 is defined by the de-coated area 4. In some embodiments, the width of some parts of the de-coated area 4 is different from that of other parts of the de-coated area 4. In addition, the glass plate 1 shown in FIG. 1 is in a rectangular shape, and in some embodiments, the glass plate can be in another shape, such as a trapezoid shape or a triangular shape.

As shown in FIG. 2, FIG. 2 is a cross-sectional partial view showing the glass plate 1 placed on an annealing mold 10 during a cooling process for annealing. The annealing mold 10 is positioned below and supports the glass plate 1. A heating and temperature-holding device 11 is disposed at a side of the annealing mold 10 and configured to heat and hold the temperature of the annealing mold 10. The heating and temperature-holding device 11 is not in direct contact with the glass plate 1. The annealing mold 10 is in contact with at least a part of the glass plate 1, and thus the glass plate 1 further includes a mold contact area 5. The mold contact area 5 is located at the edge of the glass plate 1. The mold contact area 5 at least partially overlaps with the de-coated area 4, and a width y of the mold contact area 5 satisfies y<x. The heating and temperature-holding device 11 heats from one side of the annealing mold 10 to raise the temperature of the annealing mold 10. The mold contact area 5 is located at the edge of the glass plate 1 and is in contact with the annealing mold 10. The heating and temperature-holding device 11 indirectly heats and holds the temperature of the mold contact area 5. By heating and holding the temperature of the mold contact area 5, a temperature gradient with a uniform transition can be formed at the edge of the glass plate 1 during the annealing process, thereby creating a new stress distribution and reducing the overall tensile stress of the glass plate 1.

From the edge of the glass plate 1 toward an inner side thereof, the glass plate 1 sequentially includes an edge compressive stress zone and an edge tensile stress zone. A compressive stress of the edge compressive stress zone is greater than or equal to 9 MPa, and a tensile stress of the edge tensile stress zone is less than or equal to 7 MPa.

In a specific embodiment, one surface of the glass plate 1 is coated with the transparent conductive coating 2, and the other surface of the glass plate 1 is not coated with the transparent conductive coating 2. The mold contact area 5 is located on the surface that is not coated with the transparent conductive coating 2. In the thickness direction, the mold contact area 5 overlaps with the de-coated area 4. In addition, in some embodiments, the de-coated area 4 surrounds the coated area 3.

The transparent conductive coating 2 can be directly deposited onto the surface of the glass plate 1 using chemical vapor deposition (CVD) or physical vapor deposition (PVD), e.g., by magnetron sputtering. Further, preferably, the transparent conductive coating 2 can withstand a high-temperature heat treatment, such as heat-bending, tempering, or other heat treatments involved in a bending process. Specifically, the transparent conductive coating 2 can include a metal layer, a metal alloy layer, or a metal oxide layer. The metal layer can be selected from at least one of gold (Au), silver (Ag), copper (Cu), aluminum (Al), or molybdenum (Mo). The metal alloy layer can be silver alloy. The metal oxide layer can be selected from indium tin oxide, fluorine-doped tin dioxide, aluminum-doped tin dioxide, gallium-doped tin dioxide, boron-doped tin dioxide, tin zinc oxide, antimony-doped tin oxide, or the like. For example, when the transparent conductive coating 2 includes a silver layer or a silver alloy layer, the silver layer or the silver alloy layer can be located between at least two dielectric layers, the dielectric layers containing at least one of zinc oxide, tin oxide, indium oxide, titanium oxide, silicon oxide, aluminum oxide, silicon nitride, silicon carbide, aluminum nitride, or titanium metal layers. The de-coated area 4 can be formed by pre-masked de-coating, chemical etching de-coating, laser de-coating, mechanical friction de-coating, or the like.

The formation of the edge tensile stress zone and the edge compressive stress zone relates to the distribution of the de-coated area 4 and the mold contact area 5. The coated area 3 of the surface of the glass plate 1 provided with the transparent conductive coating 2 has a relatively high reflectivity to infrared rays. Therefore, during the subsequent heat-bending process, an obvious temperature difference will be generated between the coated area 3 and de-coated area 4 in the glass plate 1 due to the difference in infrared reflectivity therebetween. The boundary line between the coated area 3 and the de-coated area 4 is referred to as a de-coating boundary line. With the de-coating boundary line as the dividing line, the de-coated area 4 of the surface of the glass plate 1 cools faster, thereby forming a compressive stress in the de-coated area 4. In contrast, the part of the coated area 3 adjacent to the de-coating boundary line cools slower, thereby forming a tensile stress in the part of the coated area 3 adjacent to the de-coating boundary line, and the closer to the de-coating boundary line, the greater the tensile stress becomes. In addition to the tensile stress and compressive stress formed in the surface of the glass plate 1 due to de-coating, during the cooling process for annealing, the edge of the glass plate 1 is in contact with the mold. The edge of the mold contact area 5 at the inner side of the glass plate 1 is referred to as a mold contact boundary line. With the mold contact boundary line as a dividing line, and because the temperature of the mold itself is low, the mold contact area 5 of the glass plate 1 cools faster. In contrast, the part of the glass plate 1 adjacent to the mold contact boundary line cools slower, thereby forming a tensile stress in the part of the surface of the glass plate 1 adjacent to the mold contact boundary line, and the closer to the mold contact boundary line, the greater the tensile stress becomes. In addition, at the edge of the glass plate 1, the width of the de-coated area 4 is greater than the width of the mold contact area 5, so that the area with the maximum tensile stress formed by the mold contact area 5 can overlap with the area with the compressive stress formed by the de-coated area 4.

Referring to FIG. 3, FIG. 3 shows stress distribution in an edge de-coated glass from the front view of the glass plate. In some embodiments, the glass plate 1 includes a coating compressive stress area 6 and a coating tensile stress area 7. The coating compressive stress area 6 is located in the de-coated area 4. The coating tensile stress area 7 is adjacent to the coating compressive stress area 6 and located at a side of the coating compressive stress area 6 away from the edge of the glass plate 1. The glass plate 1 further includes a mold compressive stress area 8 and a mold tensile stress area 9. The mold compressive stress area 8 is located in the mold contact area 5. The mold tensile stress area 9 is adjacent to the mold compressive stress area 8 and located at a side of the mold compressive stress area 8 away from the edge of the glass plate 1. The coating compressive stress area 6 at least partially overlaps with the mold tensile stress area 9.

In some embodiment, the edge compressive stress zone includes an overlapping area of the coating compressive stress area 6 and the mold compressive stress area 8, and the edge tensile stress zone includes an overlapping area of the coating tensile stress area 7 and the mold tensile stress area 9 and further includes an overlapping area of the coating compressive stress area 6 and the mold tensile stress area 9.

In some embodiment, a width of the coating compressive stress area 6 is the same as a width of the de-coated area 4, and a width of the mold compressive stress area 8 is the same as a width of the mold contact area 5. Since the width x of the de-coated area 4 is greater than the width y of the mold contact area 5, a part of the coating compressive stress area 6 can overlap with the mold compressive stress area 8, thereby increasing the overall compressive stress. The overlapping area of the coating compressive stress area 6 and the mold compressive stress area 8 is located within the edge compressive stress zone. The rest part of the coating compressive stress area 6 can overlap with the part of the mold tensile stress area 9, and thus the tensile stress and the compressive stress in this overlapping area can offset each other, thereby reducing the maximum value of the overall tensile stress to a preset range. In this overlapping area, since the tensile stress of mold tensile stress area 9 is much greater than the compressive stress of the coating compressive stress area 6, this overlapping area is located in the edge tensile stress zone. On the other hand, most of the coating tensile stress area 7 is located outside the mold tensile stress area 9, and a small part of the coating tensile stress area 7 overlaps with the rest part of the mold tensile stress area 9, and the overlapping area is located within the edge tensile stress zone. In this area, although the tensile stresses of the coating tensile stress area 7 and the mold tensile stress area 9 are superimposed with each other, the maximum tensile stress of the coating tensile stress area 7 is much less than the maximum tensile stress of the mold tensile stress area 9, and thus, the overall tensile stress of this area can still be controlled within a preset range.

Further, in some other embodiments, along the thickness direction of the glass plate 1, the projection of the mold compressive stress area 8 and the projection of the mold tensile stress area 9 are both located within the coating compressive stress area 6. In this case, the mold compressive stress area 8 overlaps with the coating compressive stress area 6, increasing the compressive stress at the edge of the glass plate 1, and the mold tensile stress area 9 overlaps with the coating compressive stress area 6, greatly reducing the overall tensile stress of the glass plate 1.

In some embodiments, the width of the coating compressive stress area 6 is the same as the width of the de-coated area 4, and the width of the coating tensile stress area 7 is in a range from 30 mm to 90 mm. The width of the mold compressive stress area 8 is the same as the width of the mold contact area 5, and the width of the mold tensile stress area 9 is in a range from 10 mm to 20 mm.

Under the condition that the transparent conductive coating 2 in the coated area 3 remains intact and the transparent conductive coating 2 in the de-coated area 4 is completely removed, taking the de-coating boundary line as the dividing line, the area located at the side of the de-coating boundary line adjacent to the edge of the glass plate 1 is the coating compressive stress area 6. The area located at the side of the de-coating boundary line adjacent to the center of the glass plate 1, within 30 mm to 90 mm, is the coating tensile stress area 7. For example, the area within 30 mm from the de-coating boundary line toward the center of the glass plate 1 is the coating tensile stress area 7, or the area within 40 mm from the de-coating boundary line toward the center of the glass plate 1 is the coating tensile stress area 7, or the area within 50 mm from the de-coating boundary line toward the center of the glass plate 1 is the coating tensile stress area 7, or the area within 60 mm from the de-coating boundary line toward the center of the glass plate 1 is the coating tensile stress area 7, or the area within 70 mm from the de-coating boundary line toward the center of the glass plate 1 is the coating tensile stress area 7, or the area within 80 mm from the de-coating boundary line toward the center of the glass plate 1 is the coating tensile stress area 7, or the area within 90 mm from the de-coating boundary line toward the center of the glass plate 1 is the coating tensile stress area 7, etc. The width of the coating tensile stress area 7 is naturally formed by the surface stress of the glass plate in the annealing process. The numerical values for the range of area are exemplary, and the numerical value for the actual range of the coating tensile stress area 7 is not specifically limited in the present application. Under the condition that the annealing mold 10 is not subjected to heating and holding temperature, taking the mold contact boundary line as the dividing line, the area located at the side of the mold contact boundary line adjacent to the edge of the glass plate 1 is the mold compressive stress area 8, and the area within 10 mm to 20 mm from the mold contact boundary line toward the center of the glass plate 1 is the mold tensile stress area 9. For example, the area within 10 mm from the mold contact boundary line toward the center of the glass plate 1 is the mold tensile stress area 9, or the area within 12 mm from the mold contact boundary line toward the center of the glass plate 1 is the mold tensile stress area 9, or the area within 15 mm from the mold contact boundary line toward the center of the glass plate 1 is the mold tensile stress area 9, or the area within 20 mm from the mold contact boundary line toward the center of the glass plate 1 is the mold tensile stress area 9. The width of the mold tensile stress area 9 is naturally formed by the surface stress of the glass plate in the annealing process. The numerical values for the range of area are exemplary, and the numerical values for the actual range of the mold tensile stress area 9 is not specifically limited in the present application.

In some embodiments, the width x of the de-coated area 4 is in a range from 20 mm to 40 mm. Specifically, in some embodiments, the width x of the de-coated area 4 is 20 mm, 25 mm, 30 mm, 35 mm, 40 mm, etc.

In some embodiments, the width y of the mold contact area 5 is in a range from 8 mm to 12 mm. Specifically, in some embodiments, the width y of the mold contact area 5 is 8 mm, 9 mm, 10 mm, 11 mm, 12 mm, etc.

In some embodiments, the width y of the mold contact area 5 satisfies y≤(x-5) mm.

In further embodiments, the width y of the mold contact area 5 satisfies y≤(x-10) mm.

In additional embodiments, the width y of the mold contact area 5 satisfies y≤(x-15) mm. The greater the difference in width between the de-coated area 4 and the mold contact area 5, the larger the overlapping area of the mold tensile stress area 9 and the de-coating compressive stress area, so that the overall tensile stress at the edge of the glass plate 1 can be controlled in a lower range, thereby improving the strength of the glass plate 1.

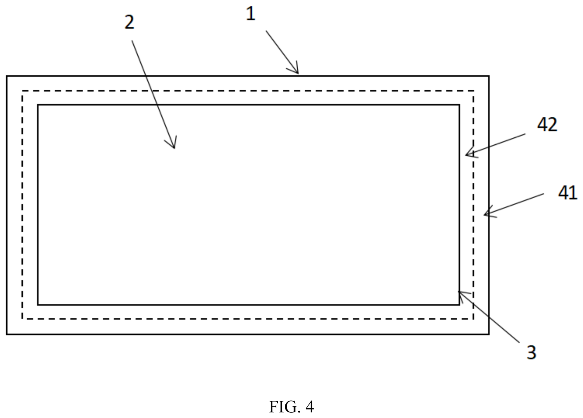

Referring to FIG. 4, in some embodiments, the de-coated area 4 includes a complete-de-coated area 41 and a partial de-coated area 42. The complete-de-coated area 41 is adjacent to the edge of the glass plate 1. The partial-de-coated area 42 is adjacent to the coated area 3. The width of the partial-de-coated area is in a range from 0 mm to 5 mm. Since the infrared reflectivity of the partial-de-coated area 42 is between that of the complete-de-coated area 41 and that of the coated area 3, the temperature gradient between the complete-de-coated area 41 and the coated area 3 can be reduced, thereby forming a uniform transition zone between the coating tensile stress and the coating compressive stress, and reducing the overall tensile stress. In some specific embodiments, the width of the partial-de-coated area 42 can be specifically 0 mm, 1 mm, 2 mm, 3 mm, 4 mm, 5 mm, etc. Further, in some embodiments, in the partial-de-coated area 42, when the transparent conductive coating 2 is partially removed, the remaining transparent conductive coating 2 is in a grid shape, or when the transparent conductive coating 2 is partially removed, the de-coating pattern is in a grid shape. In addition, the partial-de-coated area 42 can further prevent oxidation and corrosion at the edge of the transparent conductive coating 2.

In some embodiments, the compressive stress of the edge compressive stress zone is greater than or equal to 25 MPa, and the tensile stress of the edge tensile stress zone is greater than or equal to 6 MPa. In some other embodiments, the compressive stress of the edge compressive stress zone is greater than or equal to 40 MPa, and the tensile stress of the edge tensile stress zone is greater than or equal to 3 MPa.

The present application further provides a method for forming an edge de-coated glass, including the following steps:
S1, coating a transparent conductive coating 2 on a surface of a glass plate 1;
S2, completely and/or partially removing the transparent conductive coating 2 from an edge of the glass plate 1 to form a de-coated area 4 and a coated area 3, wherein a width x of the de-coated area 4 is greater than or equal to 10 mm; and
S3, heat-bending and cooling to anneal the glass plate 1 after the coating removal, thereby forming an edge compressive stress zone with a compressive stress greater than or equal to 9 MPa and an edge tensile stress zone with a tensile stress less than or equal to 7 MPa at the edge of the glass plate 1. During cooling to anneal the glass plate, the glass plate includes a mold contact area, which is located at the edge of the glass plate and is in contact with a mold, the width of the mold contact area 5 is y, the mold contact area 5 at least partially overlaps with the de-coated area 4, and the width y of the mold contact area satisfies y<x.

In step S1, the transparent conductive coating 2 can be directly deposited onto the surface of the glass plate 1 using chemical vapor deposition (CVD) or physical vapor deposition (PVD), e.g., by magnetron sputtering. Further, preferably, the transparent conductive coating 2 can withstand a high-temperature heat treatment, such as heat-bending, tempering, or other heat treatments involved in a bending process.

In step S3, when the glass plate 1 is heated to bend, the glass plate 1 is placed on a shaping mold and heated by a heating device, such that the glass is bent under the action of gravity or pressure, and then the shaped glass is placed on an annealing mold 10 and cooled to anneal.

In some embodiments, the width x of the de-coated area 4 is in a range from 20 mm to 40 mm. Specifically, in some embodiments, the width x of the de-coated area 4 is 20 mm, 25 mm, 30 mm, 35 mm, 40 mm, etc.

In some embodiments, the width y of the mold contact area 5 is in a range from 8 mm to 12 mm. Specifically, in some embodiments, the width y of the mold contact area 5 is 8 mm, 9 mm, 10 mm, 11 mm, 12 mm, etc.

In some embodiments, the width y of the mold contact area 5 and the width x of the de-coated area 4 satisfy y≤(x-5) mm.

In some further embodiments, the width y of the mold contact area 5 satisfies y≤(x-10) mm.

In some further embodiments, the width y of the mold contact area 5 satisfies y≤(x-15) mm. The greater the difference in width between the de-coated area 4 and the mold contact area 5, the larger the overlapping area of the mold tensile stress area 9 and the de-coating compressive stress area, so that the overall tensile stress at the edge of the glass plate 1 can be controlled in a lower range, thereby improving the strength of the glass plate 1.

In some embodiments, during cooling to anneal the glass plate 1, a position of the mold that is in contact with the edge of the glass plate 1 is heated to and held at a temperature. By heating and holding the temperature of the position of the mold that is in contact with the edge of the glass plate 1, a temperature gradient with a uniform transition can be formed at the edge of the glass plate 1 during the annealing process, thereby creating a new stress distribution and reducing the overall tensile stress of the glass plate. In some specific embodiments, the heating and temperature-holding device can directly heat the mold used for annealing, thereby reducing the temperature difference between the mold and the glass plate 1, thus reducing the mold tensile stress of the glass plate 1.

In some embodiments, in step S2, completely and/or partially removing the transparent conductive coating 2 from the edge of the glass plate 1 to form the de-coated area 4 and the coated area 3 includes the following steps:
S21, determining positions of the de-coated area 4 and the coated area 3.
S22, completely removing the transparent conductive coating 2 from a complete-de-coated area 41, and partially removing the transparent conductive coating 2 from a partial-de-coated area 42, wherein the de-coated area 4 includes the complete-de-coated area 41 and the partial-de-coated area 42, the complete-de-coated area 41 is adjacent to the edge of the glass plate 1, and the partial-de-coated area 42 is adjacent to the coated area 3.

In some embodiments, the de-coated area 4 includes the complete-de-coated area 41 adjacent to the edge of the glass plate 1 and the partial-de-coated area 42 adjacent to the coated area 3. The width of the partial-de-coated area 42 is in a range from 0 mm to 5 mm. Since the infrared reflectivity of the partial-de-coated area 42 is between that of the complete de-coated area 41 and that of the coated area 3, the temperature gradient between the complete-de-coated area 41 and the coated area 3 can be reduced, thereby forming a uniform transition zone between the coating tensile stress and the coating compressive stress, and reducing the overall tensile stress. In some specific embodiments, the width of the partial-de-coated area 42 can be specifically 0 mm, 1 mm, 2 mm, 3 mm, 4 mm, 5 mm, etc. Further, in some embodiments, in the partial-de-coated area 42, when the transparent conductive coating 2 is partially removed, the remaining transparent conductive coating 2 is in a grid shape, or when the transparent conductive coating 2 is partially removed, the de-coating pattern is in a grid shape. In addition, the partial-de-coated area 42 can further prevent oxidation and corrosion at the edge of the transparent conductive coating 2.

### Examples

The edge de-coated glass samples in Examples 1 to 3, as described below, were produced by using the above-described method for forming edge de-coated glass.

The edge de-coated glass in Examples 1 to 3 included a glass plate 1 and a transparent conductive coating 2 disposed on one surface of the glass plate 1.

The surface of the glass plate 1 provided with the transparent conductive coating 2 included a coated area 3 and a de-coated area 4, wherein the de-coated area 4 was located at the edge of the glass plate 1, the transparent conductive coating 2 in the de-coated area 4 was completely removed, and the width x of the de-coated area 4 was 30 mm.

The glass plate 1 further included a mold contact area 5 located at the edge of the glass plate. The mold contact area 5 at least partially overlapped with the de-coated area 4, and the width y of the mold contact area 5 was 10 mm.

From the edge of the glass plate 1 toward the inner side thereof, the glass plate 1 included an edge compressive stress zone and an edge tensile stress zone. Detection points were selected for detecting compressive stress and tensile stress, and the detection points were respectively located in the edge compressive stress zone and the edge tensile stress zone, at all edges of the glass plate 1 of Examples 1 to 3. The detection points selected in Examples 1 to 3 and the compressive stress and tensile stress at each point are shown in Table 1 below.

**Table 1**

| | Detection point | 1 | 2 | 3 | 4 | 5 | 6 | 7 |
|---|---|---|---|---|---|---|---|---|
| Example 1 | Tensile stress (MPa) | 3.98 | 4.55 | 3.98 | 1.71 | 1.14 | 1.14 | 5.69 |
| | Compressive stress (MPa) | 42.69 | 43.83 | 43.26 | 29.6 | 34.15 | 36.43 | 33.58 |
| Example 2 | Tensile stress (MPa) | 2.85 | 5.69 | 2.85 | 1.71 | 1.14 | 1.14 | 5.69 |
| | Compressive stress (MPa) | 45.54 | 43.83 | 44.4 | 29.6 | 33.58 | 36.43 | 35.86 |
| Example 3 | Tensile stress (MPa) | 2.28 | 3.98 | 1.14 | 2.28 | 1.71 | 1.14 | 5.12 |
| | Compressive stress (MPa) | 45.54 | 44.97 | 44.97 | 29.6 | 35.86 | 36.43 | 34.72 |

**Table 1-continued**

| | Detection point | 8 | 9 | 10 | 11 | 12 | 13 | |
|---|---|---|---|---|---|---|---|---|
| Example 1 | Tensile stress (MPa) | 5.69 | 5.12 | 5.69 | 1.14 | 1.71 | 1.71 | |
| | Compressive stress (MPa) | 31.31 | 30.17 | 29.6 | 38.14 | 38.71 | 33.02 | |
| Example 2 | Tensile stress (MPa) | 5.69 | 5.12 | 3.98 | 1.14 | 1.14 | 2.28 | |
| | Compressive stress (MPa) | 33.02 | 33.58 | 33.58 | 38.14 | 38.71 | 29.6 | |
| Example 3 | Tensile stress (MPa) | 5.69 | 5.12 | 4.55 | 1.14 | 1.14 | 1.71 | |
| | Compressive stress (MPa) | 33.58 | 33.58 | 32.45 | 38.14 | 38.71 | 32.45 | |

The glass plates 1 in Examples 1, 2, and 3 each can be used as an inner glass plate 1 or an outer glass plate 1 of a laminated glass. The glass plate 1 had an upper edge, a lower edge, a left edge, and a right edge. In the edge compressive stress zone and edge tensile stress zone of each edge, a plurality of equal-spaced detection points were selected at positions where the tensile stress and the compressive stress were maximum. The detection points 1, 2, and 3 were located at the upper edge of the glass plate 1, the detection points 4, 5, 6, and 11, 12, and 13 were respectively located at the left edge and the right edge of the glass plate 1, and the detection points 7, 8, 9, and 10 were located at the lower edge of the glass plate 1.

As can be seen from the above Table 1, in the three edge de-coated glass samples prepared by the above forming method, the tensile stress on the left and right edges of the glass plates 1 can be reduced to less than 3 MPa, or even to less than 2 MPa, thus more effectively preventing the left and right edges of the glass plate 1 from breaking. The tensile stress on the upper edge and lower edge can also be reduced to less than 6 MPa, and the tensile stress on the upper edge is less than that on the lower edge. In particular, the tensile stress on the upper edge can be reduced to less than 5 MPa, or even to less than 4 MPa. Thus, the strength requirements for the edges of the glass plate 1 can be met. Optionally, the tensile stress on the left edge is less than the tensile stress on the upper edge, and/or the tensile stress on the right edge is less than the tensile stress on the upper edge.

As can also be seen from the above Table 1, in the three edge de-coated glass samples prepared by the above forming method, the compressive stress of the edge compressive stress zone can be increased to more than 25 MPa for all edges, allowing the edges of the glass to have sufficient mechanical strength for protecting the glass edges. The compressive stress on the upper edge is greater than the compressive stress on the lower edge, the compressive stress on the upper edge can be increased to more than 40 MPa, and the compressive stress on the lower edge can be increased to more than 30 MPa. Optionally, the compressive stress on the upper edge is greater than the compressive stress on the left edge, and/or the compressive stress on the upper edge is greater than the compressive stress on the right edge.

The above description merely shows several embodiments of the present application, and should not be construed as limiting the scope of the present application. Any equivalent transformation, made according to the contents of the specification and the accompanying drawings of the present application, or directly or indirectly applied to the relevant technical fields, shall fall within the scope of the present application.

## Claims

1. An edge de-coated glass, comprising a glass plate and a transparent conductive coating disposed on at least one surface of the glass plate;
wherein the surface of the glass plate provided with the transparent conductive coating comprises a coated area and a de-coated area, the de-coated area is located at an edge of the glass plate, the transparent conductive coating in the de-coated area is completely and/or partially removed, and a width x of the de-coated area is greater than or equal to 10 mm;
from the edge of the glass plate toward an inner side thereof, the glass plate sequentially comprises an edge compressive stress zone and an edge tensile stress zone, a compressive stress of the edge compressive stress zone is greater than or equal to 9 MPa, and a tensile stress of the edge tensile stress zone is less than or equal to 7 MPa.

2. The edge de-coated glass according to claim 1, wherein the glass plate comprises a coating compressive stress area and a coating tensile stress area, the coating tensile stress area is adjacent to the coating compressive stress area and is located at a side of the coating compressive stress area away from the edge of the glass plate;
the glass plate further comprises a mold compressive stress area and a mold tensile stress area, the mold tensile stress area is adjacent to the mold compressive stress area and is located on a side of the mold compressive stress area away from the edge of the glass plate; and
the coating compressive stress area at least partially overlaps with the mold tensile stress area.

3. The edge de-coated glass according to claim 2, wherein the edge compressive stress zone comprises an overlapping area of the coating compressive stress area and the mold compressive stress area, and the edge tensile stress zone comprises an overlapping area of the coating tensile stress area and the mold tensile stress area and further comprises an overlapping area of the coating compressive stress area and the mold tensile stress area.

4. The edge de-coated glass according to claim 2, wherein the glass plate further comprises a mold contact area located at the edge of the glass plate, the mold contact area at least partially overlaps with the de-coated area, and a width y of the mold contact area satisfies y<x, the coating compressive stress area is located within the de-coated area, and the mold compressive stress area is located within the mold contact area.

5. The edge de-coated glass according to claim 4, wherein a width of the coating compressive stress area is same as a width of the de-coated area, a width of the coating tensile stress area is in a range from 30 mm to 90 mm; a width of the mold compressive stress area is same as a width of the mold contact area, and a width of the mold tensile stress area is in a range from 10 mm to 20 mm.

6. The edge de-coated glass according to claim 4, wherein the width y of the mold contact area is in a range from 8 mm to 12 mm.

7. The edge de-coated glass according to any one of claims 4 to 6, wherein the width y of the mold contact area satisfies y≤(x-5) mm.

8. The edge de-coated glass according to claim 6, wherein the width y of the mold contact area satisfies y≤(x-10) mm.

9. The edge de-coated glass according to claim 7, wherein the width y of the mold contact area satisfies y≤(x-15) mm.

10. The edge de-coated glass according to claim 1, wherein the width x of the de-coated area is in a range from 20 mm to 40 mm.

11. The edge de-coated glass according to claim 1, wherein the de-coated area comprises a complete-de-coated area and a partial-de-coated area, the complete-de-coated area is adjacent to the edge of the glass plate, the partial-de-coated area is adjacent to the coated area, and a width of the partial-de-coated area is in a range from 0 mm to 5 mm.

12. The edge de-coated glass according to claim 11, wherein in the partial-de-coated area, when the transparent conductive coating is partially removed, a remaining transparent conductive coating is in a grid shape, or a de-coating pattern is in a grid shape.

13. The edge de-coated glass according to claim 1, wherein the compressive stress of the edge compressive stress zone is greater than or equal to 25 MPa, and the tensile stress of the edge tensile stress zone is greater than or equal to 6 MPa.

14. A method for forming an edge de-coated glass, comprising following steps:
coating a transparent conductive coating on a surface of a glass plate;
completely and/or partially removing the transparent conductive coating from an edge of the glass plate to form a de-coated area and a coated area, wherein a width x of the de-coated area is greater than or equal to 10 mm; and
heat-bending and cooling to anneal the glass plate after coating removal, thereby forming an edge compressive stress zone with a compressive stress greater than or equal to 9 MPa and an edge tensile stress zone with a tensile stress less than or equal to 7 MPa at the edge of the glass plate.

15. The method according to claim 14, wherein during cooling to anneal the glass plate, the glass plate comprises a mold contact area, the mold contact area is located at the edge of the glass plate and is in contact with a mold, a width of the mold contact area is y, the mold contact area at least partially overlaps with the de-coated area, and the width y of the mold contact area satisfies y<x.

16. The method according to claim 15, wherein the width y of the mold contact area is in a range from 8 mm to 12 mm.

17. The method according to claim 14, wherein the width x of the decoated area is in a range from 20 mm to 40 mm.

18. The method according to any one of claims 15 to 17, wherein the width y of the mold contact area and the width x of the decoated area satisfy y≤(x-5) mm.

19. The method according to claim 14, wherein during cooling to anneal the glass plate, a position of the mold that is in contact with the edge of the glass plate is heated to and held at a temperature.

20. The method according to claim 14, wherein completely and/or partially removing the transparent conductive coating from the edge of the glass plate to form a de-coated area and a coated area comprises following steps:
determining positions of the de-coated area and the coated area; and
completely removing the transparent conductive coating from a complete-de-coated area, and partially removing the transparent conductive coating from a partial-de-coated area, wherein the de-coated area comprises the complete-de-coated area and the partial-de-coated area, the complete-de-coated area is adjacent to the edge of the glass plate, and the partial-de-coated area is adjacent to the coated area.
